# EUROPEAN PATENT SPECIFICATION

(11) **EP 1 087 670 B1**
(45) Date of publication and mention of the grant of the patent: **31.07.2002**
(21) Application number: 99927753.6
(22) Date of filing: 21.05.1999
(51) Int. Cl.: A23L 1/00, A23L 1/212

(54) **THICKENING AGENT BASED ON HOMOGENISED VEGETABLE PUREE, ITS PREPARATION AND ITS USE IN FOODSTUFFS**
VERDICKUNGSMITTEL AUF BASIS VON HOMOGENISIERTEM GEMÜSE-PÜREE, VERFAHREN SEINER HERSTELLUNG UND VERWENDUNG IN NAHRUNGSMITTELN
AGENT EPAISSISSANT A BASE DE PUREE DE LEGUMES HOMOGENEISES, ET SON PROCEDE DE PREPARATION ET D'UTILISATION DANS LES PRODUITS ALIMENTAIRES

(30) Priority: 15.06.1998 EP 98304724
(43) Date of publication of application: 04.04.2001
(73) Proprietor: UNILEVER N.V., 3013 AL Rotterdam (NL); UNILEVER PLC, London EC4P 4BQ (GB)
(72) Inventor: BELMAR, Maria, Teresa Unilever Research Colworth, Bedford Bedfordshire MK44 1LQ (GB); TAMAI, Michela SAGIT SPA, 04012 Cisterna di Latina (IT); THOMPSON, Eric, William Unilever Research Colworth, Bedford Bedfordshire MK44 1LQ (GB)
(74) Representative: Wurfbain, Gilles L.
(86) International application number: EP9903593
(87) International publication number: WO9965328

(56) References cited:
- WO-A-91/03168
- WO-A-97/05787
- DE-A- 19 609 703
- GB-A- 732 983
- US-A- 3 745 020
- US-A- 4 160 849
- US-A- 4 413 017
- US-A- 5 248 515
- PATENT ABSTRACTS OF JAPAN vol. 007, no. 053 (C-154), 3 March 1983 (1983-03-03) & JP 57 202257 A (YAKULT HONSHA KK), 11 December 1982 (1982-12-11) cited in the application

## Description

### Field of the invention

The present invention relates to a process for thickening foodstuffs, in particular thickening liquid, pourable or squeezable or spoonable foodstuffs, as well as to a thickening agent and the preparation thereof.

### Background of the invention

A broad range of thickeners is conventionally employed to achieve the desired thickness and consistency of various (liquid, pourable or squeezable) foodstuffs. Well-known in this respect are the use of starch and gellable biopolymers or gums. Examples of the latter group are gelatin, agar, carrageenans, pectins, alginates, xanthan, locust bean gum etcetera.

The application of (native) starch, however, may result in a sticky mouthfeel and/or characteristic smell or flavour of starch, which is less desirable. Also, the use of starch as a thickener may result in less heat stability of the thickened foodstuff and/or retrogradation upon cooling.

The use of native starch as a thickener without gums will generally result in a gelled consistency when cooling as a result of a network formed by the amylose when leached out from the starch granules during processing, which is undesirable for preparing pourable foodstuffs such as e.g. sauces.

The disadvantage of reduced heat stability and/or retrogradation may be overcome by the application of (chemically) modified starches, which are in many countries to be labeled as such on the packaging of the foodstuff concerned, and are as such less attractive.

The use of native starch mixed in combination with certain gums may overcome some of the disadvantages of using native starch alone: applying heat will result in amylose leaching out of the starch granules, but phase separation occurs due to the presence of the gums.

The application of gums has its disadvantages as well, ranging from a tendency to produce slimy or slightly gellified foodstuffs to non-vegetable origin (e.g. gelatin) to high costs (most gums). Additional disadvantages include reduced heat-stability for many gums similar to that of starch.

Various solutions have been proposed in the past in order to overcome the disadvantages mentioned above. A solution w.r.t. the heat stability has been proposed in WO 95/12323. Herein it is disclosed that such problems may be overcome by application of a non-pre-gelatinised starch that is present in the foodstuff as a dispersed phase in a gum.

Another attempt to overcome some of the problems as set out above is presented in JP 57/202257 (Yakult Honsha KK). Herein it is disclosed that soups, curry's, stews, sauces and the like may be thickened by the incorporation of smashed, steamed and homogenised vegetables which are rich in starch. Rich in starch is reported in this reference to mean vegetable containing about 70% or more starch in the dry vegetable, such as potato, sweet potato, taro, cassava, and pumpkin. The homogenisation is according to this reference to be carried out at pressures between 30-150 bar, with 50-80 bar being preferred. The pressures actually used are 75 and 80 bar.

WO 91/03168 relates to vegetable or plant matter processed into a homogenous, fibrous and gelatnious mass. The aim is to provide a composition which acts as emulsifier, homogeniser, thickener. Processing involves cutting, heating, blending and drying of rhubarb or cranberries.

DE 19609703 dicsloses the preparation of vegetable concentrates which can be used in e.g. soups, rice-food dishes etcetera. Treatment includes cutting to fine particles of vegetables in demin water, ultrasonic ("beschalung") treatment, filtering and concentrating. The purpose is to extract water without affecting nutrition value.

US 4 160 849 discloses treating potato pulp, to yield a product that can be used for thickening sauces.

US 5 248 515 relates to fortifying fruit juices with vegetable-originating vitamins, by incorporating a vegetable puree.

### Summary of the invention

Although the solutions given above may be sufficient for some applications, it has been found that for others these are not sufficient. For example, the solutions as proposed by JP 57/202257 still give rise to undesired starchy flavours. Additionally, the homogenised vegetables as disclosed in that reference lead to the formation of gelled compositions upon cooling, unless gums such as gelatins (e.g. in the form of bouillons) are also included in the application.

Hence, there was a need for a process for thickening liquid, pourable or squeezable foodproducts without the disadvantages as mentioned above, preferably independent upon temperature during manufacture or use. In other words, the so obtained thickened food products should be thickened but preferably not gelled, be free of a starchy flavor or smell, be at least reasonably stable under heating and cooling conditions, and preferably provide a thickening effect both in hot (e.g. sauces, soups) or cold (e.g. sauces, dressings, mayonnaise) applications.

Furthermore, the thickened foodstuff should preferably be free of gums from non-vegetable origin (such as gela. Preferably, the foodstuff so prepared should also be free of other gums or thicking biopolymers. Additionally, the thickened foodstuff should be free of any grainy or sandy texture resulting from the thickener.

It has now been found that the above can be achieved by a process for thickening a liquid, pourable or squeezable foodproduct by adding to said foodproduct a vegetable homogenate obtained by subjecting a comminuted vegetable to a homogenisation treatment, wherein the vegetable contains less then 70% starch, based on dry matter. The thickening effect can be obtained both in hot and cold preparations, and compositions can be reheated without substantial change in thickening effect.

### Detailed description of the invention

The prior art in JP 57/202257 seems to rely on a thickening effect by liberating starch that is available in starch-rich vegetables as are exemplified therein. This still does not solve a number of the problems as set out above. For example a gum (e.g. gelatin, either added as such or in the form of a bouillon) will still be needed in order to avoid the formation of a gelled foodstuff upon cooling. This is due to the presence of starch, although now originating from starch-rich vegetables instead of a different source. The product prepared according to this reference will also result in some starchy flavour or smell being present. Also, retrogradation may occur.

In contrast to this, in the present invention the thickening effect is obtained also from homogenised vegetables, but now from vegetables which do not need to be high in starch content. In fact, the thickening effect is more or less independent upon the content of starch of the vegetable used, and in order to overcome some of the disadvantages related to the use of starch as a thickener (as set out above), the content of starch of the vegetable used is preferably low. For the person of average skill in the art, it is surprising that, when confronted with the disclosure as mentioned above, a thickening effect can achieved without much starch being present.

Without wishing to be bound by any theory, it is believed that in the present invention the tickening effect is obtained by the presence of a mixture of intact vegetable cells, cell debris, cell wall fragments, etcetera.

In the process according to this invention and as set out above it is preferred that the starch content of the vegetables used for preparing the homogenised vegetable puree is less than 50% based on the dry vegetable, more preferably even lower than 35%.

Preferred vegetables for this invention are (apart from the above mentioned requirements) vegetables of white or pale colour, e.g. parsnips, mushrooms, cauliflower, swede, and turnips. For specific foodstuffs vegetables having a green or orange color, like carrots, broccoli, may also be used. Needless to say, mixtures may also be used. Particularly preferred vegetables are plants of the genus Brassica oleracea and also roots or root-like vegetables, all preferably being low in starch.

Less suitable (following their high starch content) are the vegetables as mentioned in JP 57/202257: potato, sweet potato, taro, cassava and pumpkin. Also less suitable for the purpose of the invention are tomatoes.

In the process according to the present invention the homogenisation treatment can be effected by any homogeniser suitable for application to foodstuffs. As various types of homogenisers operate following different principles, homogenisation pressures from one type of homogeniser to another type of homogeniser cannot be compared directly. It was found in the present case that homogenisation of the vegetables is preferably carried out by a high pressure homogeniser at a pressure of 100-200 bar or any equivalent treatment (in terms of results) by a different type of homogeniser, such as an ultrasonic homogeniser. For some purposes, pressures higher than 150 bar may be preferred.

In the process according to the invention, it is preferred that prior to the homogenisation step the vegetables are cooked. Preferably, the homogenisation operation is also preceded by a comminuting (including chopping, slicing, etcetera) operation, leading e.g. to a puree. Depending e.g. on the vegetables chosen, they may be peeled and/or parts of the vegetable (e.g. leaf, stem, bruised spots) may be removed first.

It was found that the homogenised vegetable puree according to the invention shows very good (physical) stability, without substantial phase separation, thinning, syneresis over periods of up to 6 weeks or more.

It was also found that the homogenised vegetable compositions prepared according to the invention are free of sandy or grainy texture, and provide a smooth mouthfeel, both in pure form and upon usage in diluted form.

The homogenised vegetable prepared along the lines as set out above may be applied to a given foodstuff in any desired quantity, e.g. in an amount of 5 to 80% by weight, based on the final formulation. However, for obtaining the desired thickening effect for liquid, pourable or squeezable foodstuffs it may be preferred to incorporate the homogenised vegetable puree in the foodstuff in an amount of between 10 and 60%, more preferably 20-45% by weight based on the final food product. The amount also depends on the vegetable used and the desired thickness. The right amount needed can readily be determined by the person of average skill in the art.

The material according to the invention can most suitable be added to foodstuffs which need to be liquid, pourable, squeezable or spoonable, such as soups, sauces, simmer sauces, sauce base products, dressings, mayonnaise, etcetera.

The homogenised vegetable puree is suitable for application to aqueous foodstuffs, in particular suitable for thickening sauces, simmer sauces, sauce base products (which are to be diluted by an aqueous liquid prior to consumption) and the like. Also, the homogenised vegetable puree can be incorporated into emulsified foodstuffs, like mayonnaise, dressings or fat/oil-containing sauces. The thickened foodstuffs according to the invention can be consumed both cold and hot, without substantial change in thickness.

Depending upon the intended use of the thickened foodstuff it may further contain water, organic acids, oil, fat, herbs, spices, comminuted vegetables, or mixtures thereof.

In the present invention, the use of thickeners based on non-starch like biopolymers like gelatin, agar, alginate, carrageenans, xanthan, pectins and pect(in)ic substances, CMC and the like can be dispensed with. Hence, a foodstuff thickened according to this invention preferably does not contain substantial amounts of thickeners or gellable compounds from animal origin (e.g. gelatin).

The present invention further relates to a liquid, pourable or squeezable foodproduct containing 5-80% by weight (preferably 10-60%) of a vegetable puree, wherein the vegetable puree has been homogenised, and wherein the starch content of the vegetable is less than 70%, based on the or vegetable. It is preferred that the vegetable in the above has been homogenised by a high-pressure homogeniser at a pressure of 100-200 bar, or any equivalent (in terms of results obtained) homogenising treatment.

The invention further relates to the use of vegetable puree, wherein the vegetable puree has been homogenised, and wherein the starch content of the vegetable is less than 70%, based on the dry vegetable for thickening liquid, pourable or squeezable foodstuffs. It is preferred that the vegetable in the above has been homogenised by a high-pressure homogeniser at a pressure of 100-200 bar, or any equivalent (in terms of results obtained) homogenising treatment.

The invention is further exemplified by the following examples, which are to be understood as to be non-limiting.

### Examples

### Examples 1-7

Seven sauces have been prepared with different homogenised vegetables as thickener, homogenisation pressures of the vegetables, and amounts of homogenised vegetable, as set out in table 1.

For the eight examples various sauces were prepared, in which was present (percentage by weight):

| | |
|---|---|
| sunflower oil | 10 % |
| modified egg-yolk | 0.5% |
| salt | 0.4% |
| sugar | 0.6% |
| homogenised vegetable: | see table 1 for amount |
| water: | to the balance |

**Table 1:**

| vegetable type, amount and homogenisation pressures. | | | |
|---|---|---|---|
| Example | Vegetable used | amount of homogenised vegetable (wt %) | Homogenisation pressure (bar) |
| 1 | Parsnips | 45% | 150 |
| 2 | Parsnips | 45% | 200 |
| 3 | Parsnips | 45% | 100 |
| 4 | Parsnips | 60% | 150 |
| 5 | Parsnips | 45% | 150 |
| 6 | Carrots | 75% | 150 |
| 7 | Broccoli | 45% | 150 |

### Processing examples 1-4

The vegetables were peeled, sliced and cooked in deionized boiling water for 15 minutes. Thereafter, they were pureed in an industrial food processor (Robocoup Juicer) with a 0.5 mm sieve.
The so-obtained vegetable purees were added to a pre-emulsion, which was prepared by mixing water, modified egg yolk, and oil in the amounts given above, after which salt and sugar were added.
The so-prepared mixture was passed through a high-pressure homogeniser (type Niro Soavi Pand lab Bench Model, at pressures indicated in table 1) to obtain the sauce (appearance: smooth and creamy)
The cold, emulsified sauce was heated to boiling, hot filled in glass jars and pasteurised.
The pasteurised samples were stored for 6 weeks (chilled), opened and reheated, which resulted in a smooth, thick, sauce having good mouthfeel and appearance.

### Processing example 5

Example 1 (45% parsnips, homogenised at 150 bar) was repeated, apart from that the pureed vegetable (and part of the water) and the rest of the sauce ingredients were passed through the high-pressure homogeniser (type Niro Soavi Pand lab Bench Model, at 150 bar) separately, and then mixed. In order to homogenise the vegetable puree, part of the water (30%) was added to the vegetable puree to be homogenised. The rest of the processing was the same. The resulting product was not distinguishable from the product from example 1.

### Processing example 6

Identical to example 1, apart from that carrots were used, in an amount of 75% (wt), and the amount of added water was less as a consequence of the increased amount of vegetable matter.
The appearance was the same as for example 1, apart from the color (being yellowish/orange for the carrots). A slight carrot taste could be detected.

### Processing example 7

Broccoli florets were cut into pieces, 2-3 cm in length and the majority of the stalk discarded. They were then treated as the parsnips in example 5. The resulting product had an appearance as the product in example 1, apart from the color (green). Mouthfeel was very much similar.

### Example 8

In this example homogenised carrots have been used to thicken a tomato sauce.
Carrots were peeled, sliced and cooked in deionized boiling water for 15 minutes. The vegetables were pureed using an industrial food processor (Robocoup Juicer) with a 0.5 mm sieve. The so-obtained vegetable puree was mixed with 30% of water and passed through a high pressure homogeniser (type Niro Soavi Pand Lab Bench Model, at a pressure of 150 bar) to obtain the carrot homogenate.
Remainder of the water (see table below), tomato paste (Brix 28), oil and salt were mixed together.
The carrot homogenate was added to the tomato sauce to obtain a thick, smooth tomato sauce having the following final composition:

| **Ingredients** | **%** |
|---|---|
| Homogenised carrot | 20 |
| tomato paste | 7.3 |
| Soybean oil | 1.6 |
| Salt | 0.8 |
| Water | 70.3 |
| | 100 |

The cold sauce was heated to boiling, hot filled in glass jars and pasteurised.
The pasteurised samples were stored for 6 weeks (chilled), opened and reheated, which resulted in a smooth, thick, tomato sauce having good mouthfeel and appearance.

### Example 9

A basic sauce was prepared from homogenised parsnip-puree.

The parsnips were peeled, sliced and cooked in deionized boiling water for 15 minutes. Thereafter, they were pureed in an industrial food processor (Robocoup Juicer) with a 0.5 mm sieve.
The so-obtained parsnip puree was mixed with 30% of water and passed through a high-pressure homogeniser (type Niro Soavi Pand lab Bench Model, at 150 bar) to obtain a basic sauce (appearance: smooth, thick and non-gritty). After chilled storage for 6 weeks the physical appearance (thick, smooth, non-gritty) was not changed.

## Claims

1. Process for thickening a liquid, pourable or squeezable foodproduct by incorporating in said foodstuff in an amount of between 5 and 80% by weight a homogenised vegetable puree obtained by subjecting a vegetable to a homogenisation. treatment wherein the vegetable has a starch content of less than 70 wt% based on the dry vegetable, wherein the homogenisation treatment is carried out by a high pressure homogeniser at a pressure of 100-200 bar or treatment using an ultrasonic homogeniser.

2. Process according to claim 1, wherein the starch content of the vegetable is less than 50% based on the dry vegetable.

3. Process according to claim 1 or 2, wherein the vegetable used for preparing the homogenised vegetable puree is one of roots, root-like vegetables, or plants of the genus Brassica oleracea.

4. Process according to claim 1, wherein the vegetable used for preparing the homogenised vegetable puree is selected from parsnips, turnips, mushrooms, cauliflower, swede, carrots, broccoli and mixtures thereof.

5. Process according to claim 1, wherein the homogenised vegetable puree is incorporated in the food product in an amount of between 10 and 60% by weight based on the final food product.

6. Process according to claim 6, wherein the homogenised vegetable puree is incorporated in the food product in an amount of between 20 and 45% by weight based on the final food product.

7. Process according to claim 1, wherein the food product further comprises water and optionally oil, fat, herbs, spices, comminuted vegetables, or mixtures thereof.

8. Process according to claim 1, wherein the food product is a dressing, mayonnaise, soup, sauce, simmer sauce or sauce base product.

9. Process according to any of claims 1-9, wherein further is incorporated in the liquid, pourable or squeezable foodproduct one or more of salt, herbs, spices, comminuted. vegetable particles, water, organic acids, meat, vegetable oils or fats or mixtures thereof.

10. Liquid, pourable or squeezable foodproduct containing 5-80% by weight of a vegetable puree, obtained according to claim 1 in than, wherein said foodproduct is a mayonnaise, dressing, or fat- or oil containing sauce, and wherein the vegetable puree is selected from parsnips, turnips, mushrooms, cauliflower, swede, carrots, broccoli and mixtures thereof.

11. Foodproduct according to claim 11 or 12, wherein the homogenised vegetable puree is present in an amount of 10-60% by weight.

12. Use of a vegetable puree, obtained according to claim 1, for thickening a liquid, pourable or squeezable foodstuff, wherein the vegetable puree is selected from parsnips, turnips, mushrooms, cauliflower, swede, carrots, broccoli and mixtures thereof.

## Patentansprüche

1. Verfahren zum Verdicken eines flüssigen, gießfähigen oder zusammendrückbaren Nahrungsmittels durch Einverleiben eine Menge zwischen 5 und 80 Gew.-% eines homogenisierten Gemüsepürees in das Nahrungsmittel, das erhalten wird, indem ein Gemüse einer Homogenisierungsbehandlung unterzogen wird, worin das Gemüse einen Stärkegehalt von weniger als 70 Gew.-% aufweist, bezogen auf das Trockgemüse, worin die Homogenisierungsbehandlung in einem Hochdruckhomogenisator bei einem Druck von 100 - 200 bar oder eine Behandlung unter Verwendung eines Ultraschallhomogenisators durchgeführt wird.

2. Verfahren nach Anspruch 1, worin der Stärkegehalt des Gemüses weniger als 50%, bezogen auf das Trockengemüse, beträgt.

3. Verfahren nach Anspruch 1 oder 2, worin das zur Erzeugung des homogenen Gemüsepürees eingesetzte Gemüse eines von Wurzel-, wurzelähnlichen Gemüsen oder Pflanzen der Gattung Brassica oleracea darstellt.

4. Verfahren nach Anspruch 1, worin das zur Zubereitung des homogenisierten Gemüsepürees eingesetzte Gemüse ausgewählt ist aus Pastinaks, Kohlrüben, Pilzen, Blumenkohl, schwedischen Rüben, Karotten, Broccoli und Mischungen hiervon.

5. Verfahren nach Anspruch 1, worin das homogenisierte Gemüsepüree in einer Menge zwischen 10 und 60 Gew.-%, bezogen auf das endgültige Nahrungsmittel, in das Nahrungsmittel einverleibt wird.

6. Verfahren nach Anspruch 5, worin das homogenisierte Gemüsepüree in einer Menge zwischen 20 und 45 Gew.-%, bezogen auf das endgültige Nahrungsmittel, in das Nahrungsmittel einverleibt wird.

7. Verfahren nach Anspruch 1, worin das Nahrungsprodukt weiterhin Wasser und gegebenenfalls Öl, Fett, Kräuter, Gewürze, zerkleinerte Gemüse oder Mischungen hiervon aufweist.

8. Verfahren nach Anspruch 1, worin das Nahrungsmittel ein Dressing, eine Mayonnaise, eine Suppe, eine Soße, eine Kochsoße oder ein Soßengrundprodukt darstellt.

9. Verfahren nach irgendeinem der Ansprüche 1 bis 9, worin weiterhin in das flüssige, gießfähige oder zusammendrückbare Nahrungsmittel ein oder mehrere Salze, Kräuter, Gewürze, zerkleinerte Gemüseteilchen, Wasser, organische Säuren, Fleisch, Pflanzenöle oder Fette oder Mischungen hiervon, einverleibt werden.

10. Flüssiges, gießfähiges oder zusammendrückbares Nahrungsmittel, enthaltend 5 bis 80 Gew.-% eines Gemüsepürees, erhalten nach Anspruch 1, worin das Nahrungsmittel eine Mayonnaise, ein Dressing oder eine Fett oder Öl enthaltende Soße darstellt und worin das Gemüsepüree ausgewählt ist aus Pastinak, Kohlrüben, Pilzen, Blumenkohl, schwedischen Rüben, Karotten, Broccoli und Mischungen hiervon.

11. Nahrungsprodukt nach Anspruch 11 oder 12, worin das homogenisierte Gemüsepüree in einer Menge von 10 bis 60 Gew.-% vorliegt.

12. Verwendung eines Gemüsepürees, erhalten nach Anspruch 1, zum Verdicken eines flüssigen, gießfähigen oder zusammendrückbaren Nahrungsmittels, worin das Gemüsepüree ausgewählt ist aus Pastinak, Kohlrüben, Pilzen, Blumenkohl, schwedischen Rüben, Karotten, Broccoli und Mischungen hiervon.

## Revendications

1. Procédé d'épaississement d'un produit alimentaire liquide, pouvant être versé ou pouvant être pressé, consistant à incorporer dans ledit produit alimentaire, dans une quantité allant de 5 à 80 % en poids, une purée de légumes homogénéisés obtenue en soumettant un légume à un traitement d'homogénéisation dans lequel le légume a une teneur en amidon inférieure à 70 % en poids sur la base du légume sec, dans lequel le traitement d'homogénéisation est effectué dans un homogénéisateur à haute pression à une pression de 100 - 200 bars ou à un traitement dans un homogénéisateur à ultrasons.

2. Procédé selon la revendication 1, dans lequel la teneur en amidon du légume est inférieure à 50 % sur la base du légume sec.

3. Procédé selon la revendication 1 ou 2, dans lequel le légume utilisé pour préparer la purée de légumes homogénéisés appartient à la famille des légumes à racine, des légumes semblables à des racines, ou est un végétal du genre *Brassica oleracea.*

4. Procédé selon la revendication 1, dans lequel le légume utilisé pour préparer la purée de légumes homogénéisés est sélectionné parmi les panais, les navets, les champignons, le choux fleur, les rutabagas, les carottes, les brocolis et les mélanges de ceux-ci.

5. Procédé selon la revendication 1, dans lequel la purée de légumes homogénéisés est incorporée dans le produit alimentaire dans une quantité comprise entre 10 et 60 % en poids sur la base du produit alimentaire final.

6. Procédé selon la revendication 6, dans lequel la purée de légumes homogénéisés est incorporée dans le produit alimentaire dans une quantité comprise entre 20 et 45 % en poids, sur la base du produit alimentaire final.

7. Procédé selon la revendication 1, dans lequel le produit alimentaire comprend en outre de l'eau et optionnellement de l'huile, de la matière grasse, des aromates, des épices, des légumes en petits morceaux, ou des mélanges de ceux-ci.

8. Procédé selon la revendication 1, dans lequel le produit alimentaire est une vinaigrette, une mayonnaise, une sauce, une sauce à réchauffer ou un produit à base de sauce.

9. Procédé selon l'une quelconque des revendications 1 à 9, dans lequel on incorpore en outre dans le produit alimentaire liquide pouvant être versé et pouvant être pressé, un ou plusieurs de produits suivants : du sel, des aromates, des épices, des particules de légumes en petits morceaux, de l'eau, des acides organiques, de la viande, des huiles ou des matières grasses végétales ou des mélanges de ceux-ci.

10. Produit alimentaire liquide, pouvant être versé et pouvant être pressé contenant de 5 à 80 % en poids d'une purée de légumes obtenue selon la revendication 1, dans lequel ledit produit alimentaire est une mayonnaise, une vinaigrette ou une sauce contenant de la matière grasse ou de l'huile et dans lequel la purée de légumes est sélectionnée à partir des panais, des navets, des champignons, du choux fleur, des rutabagas, des brocolis et des mélanges de ceux-ci dans une quantité comprise entre 10 et 60 % en poids sur la base du produit alimentaire final.

11. Produit alimentaire selon la revendication 10, dans lequel la purée de légumes homogénéisés est présente dans une quantité allant de 10 à 60 % en poids.

12. Utilisation d'une purée de légumes pouvant être obtenue selon la revendication 1, pour épaissir un produit alimentaire liquide, pouvant être versé et pouvant être pressé, dans lequel la purée de légumes est sélectionnée à partir des panais, des navets, des champignons, du choux fleur, des rutabagas, des carottes, des brocolis et des mélanges de ceux-ci.
